(19) Europäisches Patentamt
European Patent Office
Office européen des brevets

(11) Veröffentlichungsnummer: **0 176 811**
**B1**

# (12) EUROPÄISCHE PATENTSCHRIFT

(45) Veröffentlichungstag der Patentschrift: **02.03.88**

(51) Int. Cl.[4]: **C 08 K 5/07**, C 08 L 55/02, C 08 L 25/08

(21) Anmeldenummer: **85111364.7**

(22) Anmeldetag: **09.09.85**

(54) **Neue Stabilisatoren für ABS-Kunststoffe und ABS-Legierungen.**

(30) Priorität: **22.09.84 DE 3434939**

(43) Veröffentlichungstag der Anmeldung: **09.04.86 Patentblatt 86/15**

(45) Bekanntmachung des Hinweises auf die Patenterteilung: **02.03.88 Patentblatt 88/09**

(84) Benannte Vertragsstaaten: **DE FR GB IT NL**

(56) Entgegenhaltungen: **FR-A- 2 173 110**

(73) Patentinhaber: **BAYER AG**
**Konzernverwaltung RP Patentabteilung**
**D-5090 Leverkusen 1 Bayerwerk (DE)**

(72) Erfinder: **Kress, Hans-Jürgen, Dr.**
**Scheiblerstrasse 111**
**D-4150 Krefeld 1 (DE)**
Erfinder: **Eichenauer, Herbert, Dr.**
**Goethestrasse 71**
**D-4047 Dormagen 1 (DE)**
Erfinder: **Ott, Karl-Heinz, Dr.**
**Paul-Klee-Strasse 54**
**D-5090 Leverkusen 1 (DE)**
Erfinder: **Schoeps, Jochen, Dr.**
**Windmühlenstrasse 126**
**D-4150 Krefeld (DE)**
Erfinder: **Pischtschan, Alfred, Dr.**
**Zur Eiche 33**
**D-5067 Kürten (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 176 811 B1

**Beschreibung**

ABS-Kunststoffe im Sinne dieser Erfindung entstehen durch Polymerisation von harzbildenden Monomeren in Gegenwart eines Kautschuks. Dabei wird ein Teil der harzbildenden Monomeren polymerisiert und gleichzeitig chemisch an den Kautschuk gebunden, ein anderer Teil wird für sich polymerisiert. Dieses Gemisch wird als Pfropfpolymerisat bezeichnet und stellt bereits einen ABS-Kunststoff dar. Solchen Pfropfpolymerisaten kann man weiteres Harz, d. h. freies Polymerisat von harzbildenden Monomeren zusetzen und damit die Eigenschaften verändern. Auch diese Produkte werden als ABS-Kunststoff bezeichnet. Es wird also der Ausdruck « ABS », der ursprünglich Pfropfpolymerisate von Styrol und Acrylnitril auf Polybutadien bezeichnet, jetzt für sämtliche harzbildende Monomeren und sämtliche Kautschuke verwendet.

Der Erfindung liegt die Erkenntnis zugrunde, daß Benzoin oder seine Alkyl- bzw. Halogensubstituierten Derivate die Thermo- und Oxidationsstabilität von ABS-Kunststoffen und ABS-Kunststoffe enthaltenden Kunststofflegierungen, insbesondere mit aromatischen Polycarbonaten, erheblich verbessern.

Gegenstand der Erfindung sind Formmassen, die ABS-Kunststoffe und gegebenenfalls weitere Kunststoffe, bevorzugt aromatische Polycarbonate, enthalten und die mit einem Benzoinderivat der allgemeinen Formel

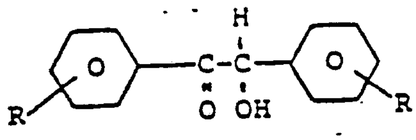

(I)

worin jedes R unabhängig vom anderen Wasserstoff, $C_1$-$C_6$-Alkyl oder Halogen bedeutet, in einer Menge von 0,05-2 Gew.-%, vorzugsweise 0,2-1 Gew.-%, bezogen auf Kunststoff, gegen Hitzeeinwirkungen stabilisiert sind.

Insbesondere sind Gegenstand der Erfindung thermoplastische Formmassen, enthaltend :

I. 100-20 Gew.-%-Tl. eines ABS-Polymerisats folgender Zusammensetzung :

A. 5-100 Gew.-%, vorzugsweise 5-80 Gew.-%, eines Pfropfmischpolymerisats, hergestellt durch Pfropfpolymerisation von

A1.) 10-95 Gew.-%, vorzugsweise 10-80 Gew.-%, einer Mischung aus

A1.1.) 50-90 Gew.-% Styrol, α-Methylstyrol, kern-substituiertem Styrol oder Methylmethacrylat oder Mischungen daraus und

A1.2.) 50-10 Gew.-% (Meth) Acrylnitril, Methylmethacrylat, Maleinsäureanhydrid, N-substituiertes Maleinimid oder Mischungen daraus, auf

A2.) 90-5 Gew.-%, vorzugsweise 90-20 Gew.-%, eines Kautschuks mit einer Glastemperatur TG $\leqslant$ 0 °C

und

B. 95-0 Gew.-%, vorzugsweise 95-20 Gew.-%, eines thermoplastischen Copolymerisats aus

B1.) 90-50 Gew.-% Styrol, α-Methylstyrol, kern-substituiertes Styrol oder Methylmethacrylat oder Mischungen daraus aus

B2.) 50-10 Gew.-% (Meth)Acrylnitril, Methylmethacrylat, Maleinsäureanhydrid, N-substituiertem Maleinimid oder Mischungen daraus,

II. 0-80 Gew.-Tl. eines aromatischen Polycarbonats

III. 0,05-2 Gew.-%, bezogen auf I + II, eines Benzoinderivates der Formel

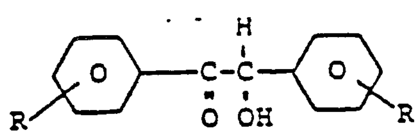

(I)

worin jedes R unabhängig vom anderen Wasserstoff, $C_1$-$C_6$-Alkyl oder Halogen, bedeutet.

Bevorzugte Formmassen sind einerseits solche, die kein Polycarbonat II, sondern nur ABS-Polymerisat I enthalten, andererseits solche, die 30-80 Gew.-Tl. ABS-Polymerisat I und 70-20 Gew.-Tl.

aromatisches Polycarbonat II enthalten.

Bevorzugte Mengen an Benzoinderivat sind 0,2-1 Gew.-%, bezogen auf I bzw. I + II.

Die Verarbeitung entsprechender Mischungen kann insbesondere bei der Herstellung großflächiger Teile Temperaturbelastungen von bis zu 300 °C hervorrufen. Hierbei können Oberflächenstörungen in Form von Bläschen oder Schlieren und Streifen auftreten bzw. kann es zu deutlichen Gelb- bis Braunverfärbungen kommen.

Bekannt ist gemäß EP-A 23 291 die Verwendung von Estern der phosphorigen Säure als Stabilisatoren. Für Temperaturen > 280 °C ist die hierbei erreichte Stabilisierung nicht ausreichend (s. Vergleichsversuch 7).

Es zeigte sich nun, daß durch Einsatz von Benzoinderivaten ABS-Polymerisatformmassen resultieren, die einen deutlich besseren Rohton (geringere Gelb- bis Braunverfärbung) gegenüber unstabilisiertem Material aufweisen, und daß ein entsprechender Zusatz zu Polycarbonat-ABS-Formmassen zu Produkten führt, die eine deutlich höhere Temperaturbelastbarkeitsgrenze bei gleichzeitig verbesserter Kerbschlagzähigkeit zeigen.

Die erfindungsgemäß stabilisierten ABS-Polymerisate I enthalten 5-100 Gew.-% eines Pfropfpolymerisates (A.) und 95-0 Gew.-% eines thermoplastischen Copolymerisates (Harzes) (B.).

Pfropfpolymerisate (A) im Sinne der Erfindung sind solche, in denen auf einen Kautschuk entweder ein Monomer aus der Reihe Styrol, Methylmethacrylat oder eine Monomermischung von 95-50 Gew.-% Styrol, α-Methylstyrol, kernsubstituiertes Styrol, Methylmethacrylat oder Mischungen daraus und 5-50 Gew.-% (Meth) Acrylnitril, Maleinsäureanhydrid, N-substituierte Maleinimide oder Mischungen daraus pfropfpolymerisiert sind. Geeignete Kautschuke sind insbesondere Polybutadien, Butadien/Styrol-Copolymerisate mit bis zu 30 Gew.-% eines niederen Alkylesters von Acryl- oder Methacrylsäure (z. B. Methylacrylat, Ethylacrylat, Methylmethacrylat und Ethylmethacrylat).

Weitere geeignete Kautschuke sind z. B. Polyisopren oder Polychloropren. Geeignet sind weiterhin Alkylacrylatkautschuke auf der Basis von $C_1$-$C_8$-Alkylacrylaten, insbesondere Ethyl-, Butyl-, Ethylhexylacrylat. Diese Alkylacrylatkautschuke können gegebenenfalls bis zu 30 Gew.-% Monomere wie Vinylacetat, Acrylnitril, Styrol, Methylmethacrylat, Vinylether copolymerisiert enthalten. Diese Alkylacrylatkautschuke können weiterhin kleinere Mengen (bis zu 5 Gew.-%) vernetzend wirkender ethylenisch ungesättigter Monomerer enthalten. Solche sind z. B. Alkylendioldi (meth) -acrylate, Polyesterdi-(meth)-acrylat, Di-, Tri-Vinylbenzol, Triallylcyanurat, Allyl-(meth)-acrylat, Butadien, Isopren etc. Solche Alkylacrylate sind bekannt. Acrylatkautschuke als Pfropfgrundlage können auch Produkte sein, die einen vernetzten Dienkautschuk aus einem oder mehreren konjugierten Dienen, wie Polybutadien, oder ein Copolymerisat eines konjugierten Diens mit einem ethylenisch ungesättigten Monomer, wie Styrol und/oder Acrylnitril, als Kern enthalten.

Bevorzugt sind Dienmonomerkautschuke.

Die Pfropfmischpolymerisate (A) enthalten 10-95 Gew.-%, insbesondere 20-70 Gew.-%, Kautschuk und 90-5 Gew.-%, insbesondere 80-30 Gew.-%, pfropfcopolymerisierte Monomere. Die Kautschuke liegen in diesen Pfropfmischpolymerisaten in Form wenigstens partiell vernetzter Teilchen eines mittleren Teilchendurchmessers ($d_{50}$) von 0,09 bis 5 μm, insbesondere von 0,1-1 μm, vor. Derartige Pfropfmischpolymerisate können durch radikalische Pfropfcopolymerisation von Monomeren aus der Reihe Styrol, α-Methylstyrol, kernsubstituiertem Styrol, (Meth) Acrylnitril, Methylmethacrylat, Maleinsäureanhydrid, N-subst. Maleinimid in Gegenwart der zu pfropfenden Kautschuke hergestellt werden. Bevorzugte Herstellungsverfahren für solche Pfropfmischpolymerisate sind die Emulsions-, Lösungs-, Masse- oder Suspensionspolymerisation.

Die Copolymerisate (B) können aus den Pfropfmonomeren für (A) oder ähnlichen Monomeren aufgebaut sein, insbesondere aus wenigstens einem Monomeren aus der Reihe Styrol, α-Methylstyrol, Halogenstyrol, Acrylnitril, Methacrylnitril, Methylmethacrylat, Maleinsäureanhydrid, Vinylacetat und N-substituiertes Maleinimid. Es handelt sich bevorzugt um Copolymerisate aus 95-50 Gew.-% Styrol, α-Methylstyrol, Methylmethacrylat oder Mischungen daraus mit 5-50 Gew.-% Acrylnitril, Methacrylnitril, Methylmethacrylat, Maleinsäureanhydrid oder Mischungen daraus. Solche Copolymere entstehen auch bei der Pfropfmischpolymerisation als Nebenprodukte. Es ist üblich, neben den in Pfropfpolymerisat enthaltenen Copolymeren noch getrennt hergestellte Copolymere zuzumischen.

Diese müssen nicht mit den in den Pfropfpolymeren vorliegenden ungepropften Harzanteilen chemisch identisch sein.

Geeignete getrennt hergestellte Copolymere sind harzartig, thermoplastisch und kautschukfrei ; es sind insbesondere Copolymere aus Styrol und/oder α-Methylstyrol mit Acrylnitril, gegebenenfalls in Mischung mit Methylmethacrylat.

Besonders bevorzugte Copolymerisate bestehen aus 20-40 Gew.-% Acrylnitril und 80-60 Gew.-% Styrol oder α-Methylstyrol. Solche Copolymerisate sind bekannt und lassen sich insbesondere durch radikalische Polymerisation, insbesondere durch Emulsion-, Suspension-, Lösungs- oder Massepolymerisation herstellen. Die Copolymerisate besitzen vorzugsweise Molekulargewichte von 15 000 bis $2.10^5$.

Bevorzugte aromatische Polycarbonate (II) im Sinne der Erfindung sind Homopolycarbonate und Copolycarbonate aus einem oder mehreren der folgenden Diphenole :

Hydrochinon

Resorcin
Dihydroxydiphenyle
Bis-(hydroxyphenyl)-alkane
Bis-(hydroxyphenyl)-cycloalkane
Bis-(hydroxyphenyl)-sulfide
Bis-(hydroxyphenyl)-ether
Bis-(hydroxyphenyl)-ketone
Bis-(hydroxyphenyl)-sulfoxide
Bis-(hydroxyphenyl)-sulfone
α,α'-Bis-(hydroxyphenyl)-diisopropylbenzole,

wobei die Phenylreste auch Alkyl- oder Halogensubstituenten tragen können. Diese und weitere geeignete Diphenole sind z. B. in den US-A-3 028 365, 2 999 835, 3 148 172, 3 285 601, 2 991 273, 3 271 367, 3 062 781 und 2 999 846, in den deutschen Offenlegungsschriften 1 570 703, 2 052 050, 2 062 052, 2 211 956, 2 211 957, der französischen Patentschrift 1 561 518 und der Monographie « H. Schnell, Chemistry and Physics of Polycarbonates, Interscience Publishers, New York, 1964 » beschrieben.

Besonders bevorzugte Diphenole sind :
4,4'-Dihydroxydiphenyl
2,2-Bis-(4-hydroxyphenyl)-propan
2,4-Bis-(4-hydroxyphenyl)-2-methylbutan
1,1-Bis-(4-hydroxyphenyl)-cyclohexan
α,α'-Bis-(4-hydroxyphenyl)-p-diisopropylbenzol
2,2-Bis-(3-methyl-4-hydroxyphenyl)-propan
2,2-Bis-(3-chlor-4-hydroxyphenyl)-propan
Bis-(3,5-dimethyl-4-hydroxyphenyl)-methan
2,2-Bis-(3,5-dimethyl-4-hydroxyphenyl)-propan
Bis-(3,5-dimethyl-4-hydroxyphenyl)-sulfon
2,4-Bis-(3,5-dimethyl-4-hydroxyphenyl)-2-methylbutan
1,1-Bis-(3,5-dimethyl-4-hydroxyphenyl)-cyclohexan
α,α-Bis-(3,5-dichlor-4-hydroxyphenyl)-propan
2,2-Bis-(3,5-dibrom-4-hydroxyphenyl)-propan.

Bevorzugte aromatische Polycarbonate sind solche, denen ein oder mehrere der als bevorzugt genannten Diphenole zugrundeliegen. Besonders bevorzugt werden Copolycarbonate, denen 2,2-Bis-(4-hydroxyphenyl)-propan und eines der anderen als besonders bevorzugt genannten Diphenole zugrundeliegen. Besonders bevorzugt sind weiterhin Polycarbonate allein auf Basis von 2,2-Bis-(4-hydroxyphenyl)-propan oder 2,2-Bis-(3,5-dimethyl-4-hydroxyphenol)-propan.

Die aromatischen Polycarbonate können nach bekanntem Verfahren hergestellt werden, z. B. einer Schmelzumesterung aus Bisphenol und Diphenylcarbonat und in Lösung aus Bisphenolen und Phosgen. Die Lösung kann homogen sein (« Pyridinverfahren ») oder heterogen (« Zweiphasengrenzflächenverfahren »). Erfindungsgemäß sind Polycarbonate, die in Lösung, insbesondere nach dem Zweiphasengrenzflächenverfahren hergestellt worden sind, besonders geeignet.

Die aromatischen Polycarbonate können durch den Einbau geringer Mengen, vorzugsweise von Mengen zwischen 0,05 und 2,0 Mol-% (bezogen auf eingesetzte Diphenole) an drei- oder mehr als dreifunktionellen Verbindungen, z. B. solchen mit drei oder mehr als drei phenolischen Hydroxygruppen verzweigt sein.

Die aromatischen Polycarbonate sollen in der Regel mittlere Gewichtsmittel-Molekulargewichte $\bar{M}_w$ von 10 000 bis über 200 000, vorzugsweise von 20 000 bis 80 000 haben (ermittelt durch Messungen der relativen Viskosität in $CH_2Cl_2$ bei 25 °C bei einer Konzentration von 0,5 Gew.-%).

Die Benzoinderivate der allgemeinen Formel

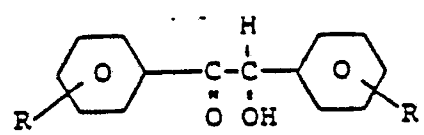

(I)

sind literaturbekannt bzw. nach literaturbekannten Verfahren herstellbar (s. Beilstein 31.8, S. 167), und zwar durch Kondensation von Benzaldehyd beziehungsweise substituiertem Benzaldehyd in Gegenwart kleiner Mengen Kaliumcyanid in wäßriger oder wäßrig-alkoholischer Lösung.

In der allgemeinen Formel steht unabhängig voneinander R für : Wasserstoff, Halogen, wie Chlor, Brom, $C_1$-$C_6$-Alkyl wie Methyl, Ethyl, Propyl, Isopropyl, Butyl, Pentyl, Hexyl.

Besonders bevorzugt ist Benzoin (R = Wasserstoff).

Die erfindungsgemäßen Stabilisatoren können in jeder beliebigen Weise in die Formmassen eingearbeitet werden. Beispielsweise können sie bei Temperaturen von 200-330 °C in gebrauchlichen Aggregaten wie Innenknetern, Extrudern, Doppelwellenschnecken schmelzcompoundiert werden. Hierbei können die Stabilisatoren pur oder als Konzentrat in einem der weiteren Bestandteile eingesetzt

werden. Sie können auch, z. B. im Falle der zu stabilisierenden ABS-Kunststoffe, schon bei der Herstellung zugefügt werden, beispielsweise als wäßrige Emulsion zum Latex eines ABS-Kunststoffes.

Neben den erfindungsgemäßen Stabilisatoren können den Formmassen natürlich die üblichen Zusätze wie Pigmente, Füllstoffe, Gleitmittel, Entformungsmittel und dergleichen zugesetzt werden. Es ist auch möglich, noch weitere bekannte Stabilisatoren, beispielsweise cyclische Phosphite, zuzusetzen.

Die Formmassen der vorliegenden Erfindung können zur Herstellung von Formkörpern jeder Art verwendet werden. Insbesondere können Formkörper durch Spritzguß hergestellt werden. Beispiele für herstellbare Formkörper sind :

Gehäuseteile jeder Art (z. B. für Haushaltsgeräte wie Saftpressen, Kaffeemaschinen, Mixer) oder Abdeckplatten für den Bausektor und Teile für den Kfz-Sektor. Sie werden außerdem auf dem Gebiet der Elektrotechnik eingesetzt, weil sie sehr gute elektrische Eigenschaften haben. Eine weitere Form der Verarbeitung ist die Herstellung von Formkörper durch Tiefziehen aus vorher hergestellten Platten oder Folien.

Teilchengröße bedeutet immer mittlerer Teilchendurchmesser $d_{50}$, ermittelt durch Ultrazentrifugenmessungen nach W. Scholtan et al. Kolloidz. u. Z. Polymere 250 (1972) 782-796.

## Beispiele

Eingesetzte Polymerisate und Polykondensate :

A. SAN-Pfropfpolymerisat von 50 Gew.-% Styrol-Acrylnitril-Gemisch (im Gew.-Verhältnis von 72:28) auf 50 % teilchenförmiges Polybutadien einer mittleren Teilchengröße ($d_{50}$) von 0,4 µm, erhalten durch Emulsionspolymerisation.

B. Styrol-Acrylnitril-Copolymerisat mit einem Styrol-Acrylnitril-Verhältnis von 70:30 und einer Grenzviskosität von $[\eta] = 0{,}55$ dl/g (Messung in Dimethylformamid bei 20 °C).

C. Aromatisches Polycarbonat aus 2,2-Bis (4-hydroxyphenyl)-propan (Bisphenol A) mit einer relativen Viskosität von 1,26, gemessen in $CH_2Cl_2$ bei 25 °C (0,5 gew.-%ige Lösung)

$III_1$. Benzoin mit einem Schmelzpunkt von 133-136 °C

$III_2$. Phosphorigsäureester des Bis-(2-hydroxy-3-cyclohexyl-5-methylphenyl)-methans (Stabilisator gemäß EP-A 23 291).

Versuch 1, 2 und Vergleichsversuch 3

Die Herstellung der erfindungsgemäßen Formmassen bzw. der Vergleichsmaterialien erfolgte durch Schmelzcompoundierung in einem Innenkneter (Fassungsvermögen 3,8 l) mit der Bezeichnung LK 1 der Firma Francis-Shaw bei einer Temperatur von 200 °C.

Zur Bestimmung der Helligkeit (Rohton) der Proben, wurden Musterplatten der Abmessung von 60 × 40 × 2 mm hergestellt. Das benutzte Aggregat war ein Monomat 25, wobei die Verarbeitungsbedingungen wie folgt waren :

| | |
|---|---|
| Schneckendrehzahl : | 100/min |
| Einspritzgeschwindigkeit : | 2,5 s |
| Nachdruck : | $6 \times 10^6$ Pa |
| Verweilzeit des Materials im Aggregat : | 6,5 min |

Die Messung der Helligkeit und der Vergilbung erfolgte gemäß DIN 6174 durch Bestimmung der Normfarbwerte X und Z mit Hilfe eines Farbmeßgerätes MS 2025 der Firma Macbeth an nichtpigmentierten, naturfarbenen Musterplättchen.

Als Spritztemperaturen wurden 220, 260, 280 und 300 °C gewählt. Die so erhaltenen Proben wurden anschließend auf ihre Helligkeit hin geprüft. Die erhaltenen Werte in Abhängigkeit von der jeweiligen Spritztemperatur zeigen Figur 1 und 2. Die folgende Aufstellung liefert die Zusammensetzung der geprüften Formmassen.

| | A (Gew.-Tl.) | B (Gew.-Tl.) | $III_1$ (Gew.-Tl.) |
|---|---|---|---|
| Versuch 1 | 40 | 60 | 0,25 |
| 2 | 40 | 60 | 0,5 |
| 3 (Vergleich) | 40 | 60 | - |

Figur 1 und 2 zeigen, daß durch Benzoinzusatz der Rohton der Formmassen deutlich verbessert wird.

Versuch 4 bis 5 und Vergleichsversuch 6-7

Die Herstellung der erfindungsgemäßen Formmassen bzw. der Vergleichsmaterialien erfolgte durch Compoundierung der Einzelkomponenten über einen Doppelwellenextruder von Werner & Pfleiderer mit der Bezeichnung ZSK 53. Hierbei wurden die Produkte bei einer Massetemperatur von 240 °C, einer Umdrehungszahl von 60 Upm und einem Durchsatz von 24 kg/h gemischt und anschließend granuliert.

Zur Bestimmung der Kerbschlagzähigkeit wurden bei 260 °C bzw. 280 °C Flachstäbe (50 mm × 6 mm × 4 mm) spritzgegossen und mit einer V-förmigen Kerbe versehen (Kerbtiefe 2,7 mm), gemäß Din 53 452/ISO R 179 geprüft.

Bestimmung der Temperaturbelastbarkeitsgrenze :

Das zu prüfende Material wurde 2 bis 3 h bei 110 °C im Turbetuve getrocknet und anschließend zu Musterplatten der Abmessungen von 60 × 40 × 2 mm verspritzt. Das benutzte Aggregat war ein Monomat 25, wobei die Verarbeitungsbedingungen wie folgt waren :

| | |
|---|---|
| Schneckendrehzahl | 100/min |
| Einspritzgeschwindigkeit | 2,5 s |
| Nachdruck | $6 \times 10^6$ Pa |
| Verweilzeit des Materials im Aggregat | 6,5 min |

Die Massetemperatur wurde in 10 °C-Intervallen von 220 °C auf 300 °C erhöht. Bei jeder Temperatur wurden 10 Musterplatten hergestellt und visuell auf ihre Oberflächenbeschaffenheit hin beurteilt. Als Temperaturbelastbarkeitsgrenze wird dabei die Temperatur angenommen, bei der sich erste Oberflächenstörungen (z. B. Schlieren) ergaben.

Die Zusammensetzung der geprüften Materialien sowie die erhaltenen Daten sind in Tabelle 2 aufgeführt.

(Siehe Tabelle 2, Seite 7 f.)

Tabelle 2

| | A | B | C | $III_1$ | $III_2$ | Spritzgußtemp. | Kerbschlag-zähigkeit | Temperatur-belastbar-keitsgrenze |
|---|---|---|---|---|---|---|---|---|
| | Gew.-Tl. | Gew.-Tl. | Gew.-Tl. | Gew.-Tl. | Gew.-Tl. | °C | $kJ/m^2$ | °C |
| Versuch 4 | 24 | 16 | 60 | 0,1 | - | 260 | 47 | 290 |
| | | | | | | 280 | 38 | |
| Versuch 5 | 24 | 16 | 60 | 0,3 | - | 260 | 50 | 300 |
| | | | | | | 280 | 41 | |
| Versuch 6 (Vergleich) | 24 | 16 | 60 | - | - | 260 | 41 | 270 |
| Versuch 7 (Vergleich) | 24 | 16 | 60 | - | 0,25 | 260 | 45 | 280 |
| | | | | | | 280 | 21 | |

**Patentansprüche**

1. Thermoplastische Formmassen, enthaltend einen ABS-Kunststoff und gegebenenfalls weitere Kunststoffe, stabilisiert mit einem Benzoinderivat der allgemeinen Formel

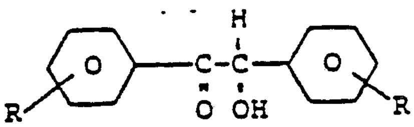

(I)

worin jedes R unabhängig vom anderen Wasserstoff, $C_1$-$C_6$-Alkyl oder Halogen bedeutet, in Mengen von 0,05-2 Gew.-%, bezogen auf die Kunststoffe.

2. Thermoplastische Formmassen enthaltend :

I. 100-20 Gew.-Tl. eines ABS-Polymerisates folgender Zusammensetzung :

A. 5-100 Gew.-%, vorzugsweise 5-80 Gew.-%, eines Pfropfmischpolymerisates, hergestellt durch Pfropfpolymerisation von

A1.) 10-95 Gew.-%, vorzugsweise 10-80 Gew.-%, einer Mischung aus

A1.1.) 50-90 Gew.-% Styrol, α-Methylstyrol, kernsubstituiertes Styrol oder Methylmethacrylat oder Mischungen daraus und

A1.2.) 50-10 Gew.-% (Meth)Acrylnitril, Methylmethacrylat, Maleinsäureanhydrid, N-subst. Maleinimid oder Mischungen daraus, auf

A2.) 90-5 Gew.-%, vorzugsweise 90-20 Gew.-%, eines Kautschuks mit einer Glastemperatur $T_G \leq 0$ °C

und

B. 95-0 Gew.-%, vorzugsweise 95-20 Gew.-%, eines thermoplastischen Copolymerisats aus

B1.) 90-50 Gew.-% Styrol, α-Methylstyrol, kernsubst. Styrol oder Methylmethacrylat oder Mischungen daraus und

B2.) 50-10 Gew.-% (Meth)-Acrylnitril, Methylmethacrylat, Maleinsäureanhydrid, N-subst. Maleinimid oder Mischungen daraus,

II. 0-80 Gew.-Tl. eines aromatischen Polycarbonates

III. 0,05-2,0 Gew.-Tl., bezogen auf 100 Gew.-Tl. I + II, eines Benzoinderivates der Formel

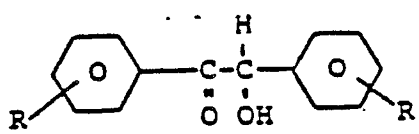

worin jedes R unabhängig vom anderen Wasserstoff, $C_1$-$C_6$-Alkyl oder Halogen bedeutet.

**Claims**

1. Thermoplastic moulding compounds containing an ABS plastics and optionally other plastics, stabilized with a benzoin derivative corresponding to the following general formula

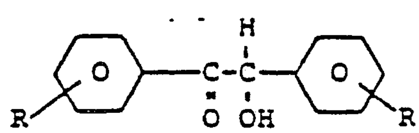

(I)

wherein each R represents, independently of the other, hydrogen, $C_1$-$C_6$-alkyl or halogen ; used in quantities of from 0.05 to 2 % by weight, based on the plastics.

2. Thermoplastic moulding compounds containing :

I. From 100 to 20 parts by weight of an ABS polymer having the following composition :

A. From 5 to 100 % by weight, preferably from 5 to 80 % by weight, of a graft copolymer prepared by the graft polymerisation of

A1.) From 10 to 95 % by weight, preferably from 10 to 80 % by weight, of a mixture of

A1.1.) From 50 to 90 % by weight of styrene, α-methylstyrene, nuclear-substituted styrene or methyl methacrylate or mixtures thereof and

A1.2.) From 50 to 10 % by weight of (meth)acrylonitrile, methyl methacrylate, maleic acid anhydride, N-substituted maleimide or mixtures thereof ; on

A2.) From 90 to 5 % by weight, preferably from 90 to 20 % by weight of a rubber having a glass temperature $T_G \leq 90$ °C and

B. From 95 to 0 % by weight, preferably from 95 to 20 % by weight, of a thermoplastic copolymer of

B1.) From 90 to 50 % by weight of styrene, α-methylstyrene, nuclear-substituted styrene or methyl methacrylate or mixtures thereof and

B2.) From 50 to 10 % by weight of (meth)acrylonitrile, methyl methacrylate, maleic acid anhydride, N-substituted maleimide or mixtures thereof ;

II. 0 to 80 parts by weight of an aromatic polycarbonate ;

III. From 0.05 to 2.0 parts by weight, based on 100 parts by weight of I + II, of a benzoin derivative corresponding to the formula

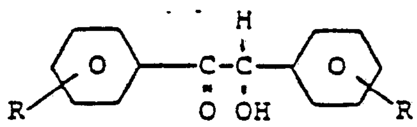

wherein each R denotes, independently of the other, hydrogen, $C_1$-$C_6$-alkyl or halogen.

## Revendications

1. Mélanges à mouler thermoplastiques, contenant une matière plastique ABS et, le cas échéant, d'autres matières plastiques, stabilisés avec un dérivé de benzoïne de formule générale

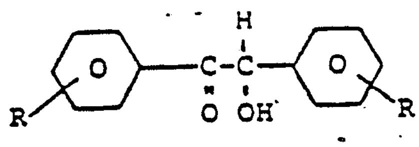

(I)

dans laquelle chacun des symboles R représente, indépendamment de l'autre, l'hydrogène, un groupe alkyle en $C_1$ à $C_6$ ou un halogène, en quantités de 0,05 à 2 % en poids, par rapport aux matières plastiques.

2. Mélanges à mouler thermoplastiques contenant :

I. 100 à 20 parties en poids d'un polymère ABS de composition suivante :

A. 5 à 100 % en poids, de préférence 5 à 80 % en poids, d'un copolymère de greffage préparé par polymérisation par greffage de

A1.) 10 à 95 % en poids, de préférence 10 à 80 % en poids, d'un mélange formé

A1.1.) de 50 à 90 % en poids de styrène, d'α-méthylstyrène, de styrène substitué sur le noyau ou de méthacrylate de méthyle ou leurs mélanges et

A1.2.) de 50 à 10 % en poids de (méth)acrylonitrile, de méthacrylate de méthyle, d'anhydride d'acide maléique, de maléinimide N-substitué ou leurs mélanges sur

A2.) 90-5 % en poids, de préférence 90-20 % en poids d'un caoutchouc ayant une température Tg de transition vitreuse inférieure ou égale à 0 °C

et

B. 95-0 % en poids, de préférence 95-20 % en poids d'un copolymère thermoplastique formé

B1.) de 90 à 50 % en poids de styrène, d'α-méthylstyrène, de styrène substitué sur le noyau ou de méthacrylate de méthyle ou leurs mélanges et

B2.) 50-10 % en poids de (méth)acrylonitrile, de méthacrylate de méthyle, d'anhydride d'acide maléique, de maléinimide N-substitué ou leurs mélanges,

II. 0-80 parties en poids d'un polycarbonate aromatique

III. 0,05 à 2,0 % en poids, par rapport à 100 parties en poids de I + II, d'un dérivé de benzoïne de formule

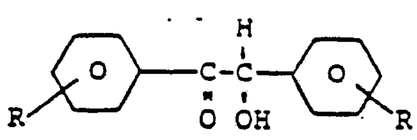

dans laquelle chaque R représente, indépendamment de l'autre, l'hydrogène, un groupe alkyle en $C_1$ à $C_6$ ou un halogène.

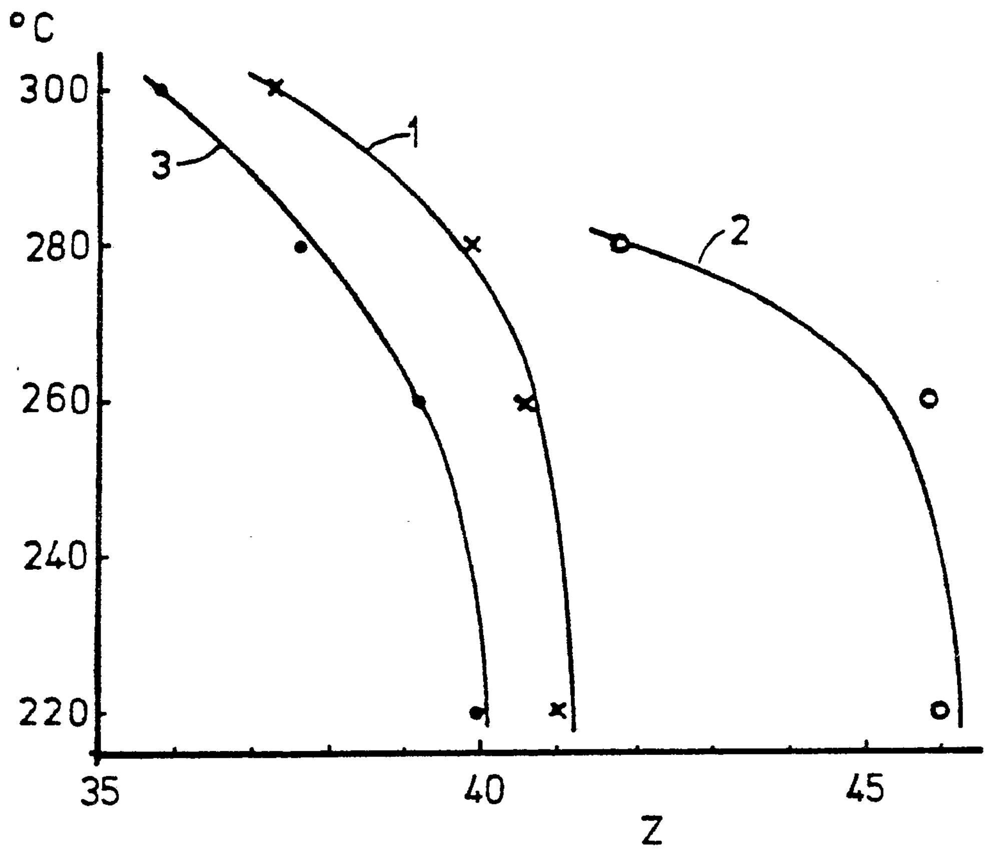
°C
300
280
260
240
220
35
40
45
Z
1
2
3

FIG.1

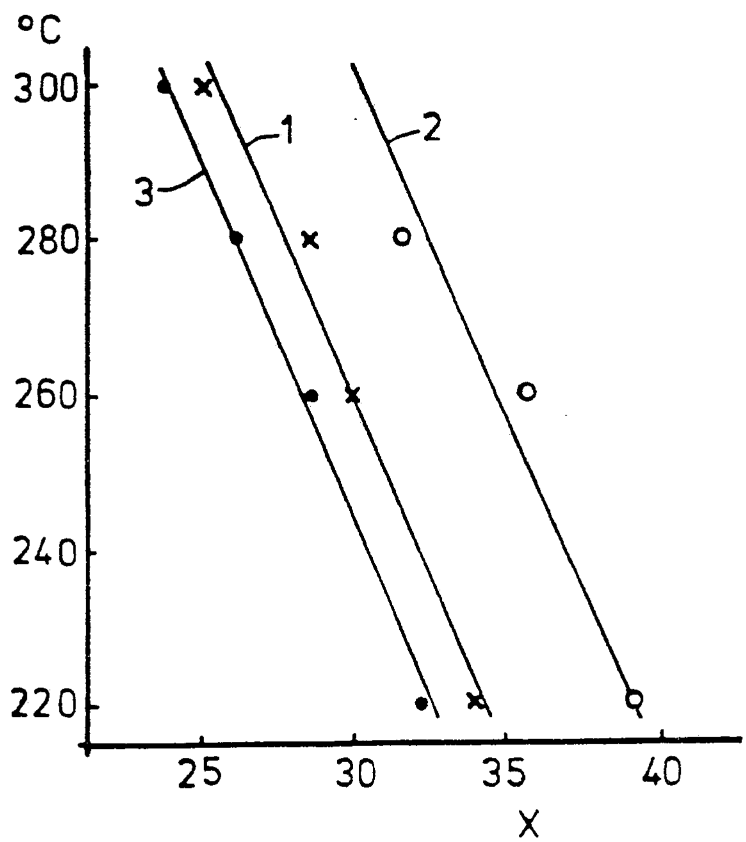
°C
300
280
260
240
220
25
30
35
40
X
1
2
3

FIG. 2